(19) Europäisches Patentamt
European Patent Office
Office européen des brevets

(11) **EP 2 126 317 B1**

(12) **EUROPÄISCHE PATENTSCHRIFT**

(45) Veröffentlichungstag und Bekanntmachung des Hinweises auf die Patenterteilung:
**24.10.2012 Patentblatt 2012/43**

(21) Anmeldenummer: **08701680.4**

(22) Anmeldetag: **01.02.2008**

(51) Int Cl.:
**F02D 19/08** *(2006.01)*       **F17C 13/02** *(2006.01)*

(86) Internationale Anmeldenummer:
**PCT/EP2008/051274**

(87) Internationale Veröffentlichungsnummer:
**WO 2008/104438 (04.09.2008 Gazette 2008/36)**

(54) **VERFAHREN UND VORRICHTUNG ZUR STEUERUNG EINER BRENNKRAFTMASCHINE EINES AUF DEN BETRIEB MIT CNG-GAS UMSCHALTBAREN KRAFTFAHRZEUGS**

METHOD AND DEVICE FOR CONTROLLING AN INTERNAL COMBUSTION ENGINE OF A MOTOR VEHICLE WHICH CAN BE SWITCHED TO OPERATION WITH CNG

PROCÉDÉ ET DISPOSITIF DE COMMANDE D'UN MOTEUR À COMBUSTION INTERNE D'UN VÉHICULE POUVANT FONCTIONNER AU GAZ NATUREL COMPRIMÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.02.2007 DE 102007009546**

(43) Veröffentlichungstag der Anmeldung:
**02.12.2009 Patentblatt 2009/49**

(73) Patentinhaber: **Continental Automotive GmbH 30165 Hannover (DE)**

(72) Erfinder:
• **BAUER, Erwin**
**93138 Lappersdorf (DE)**
• **ELLMER, Dietmar**
**93059 Regensburg (DE)**

(56) Entgegenhaltungen:
**EP-A- 0 718 484        EP-A- 1 344 918**
**WO-A-2006/106145       DE-B3-102006 022 357**
**US-A1- 2004 111 210**

**Beschreibung**

Die Erfindung betrifft ein Verfahren bzw. eine Vorrichtung zur Steuerung einer Brennkraftmaschine eines wahlweise auf den Betrieb mit Ottokraftstoff oder CNG-Gas umschaltbaren Kraftfahrzeugs, wobei bei Unterschreiten eines Mindestgasdrucks im Gastank des Kraftfahrzeugs eine Umschaltung auf den Betrieb mit Ottokraftstoff erfolgt.

Eine derartige Vorrichtung und Verfahren sind bereits aus der EP 0 718 484 B1 bekannt.

Es ist bereits bekannt, dass Kraftfahrzeuge, die mit einem Otto-Motor ausgerüstet sind, mit einem sogenannten CNG-Gas (Erdgas) betrieben werden können (CNG Compressed Natural Gas). Das CNG-Gasgemisch ist auch als Erdgas bekannt. Mit einer entsprechenden Umrüstung kann ein solches CNG-Fahrzeug entweder ausschließlich mit Erdgas (monovalenter Betrieb) oder als Bi-Fuel-Variante wahlweise mit Benzin oder Erdgas betrieben werden. Das Erdgas wird unter hohem Druck bei etwa 200 bar stark komprimiert und in einem oder mehreren drucksicheren Kraftstofftanks im Kraftfahrzeug mitgeführt. Hauptbestandteil von Erdgas ist mit 85 - 98% Methan ($CH_4$). Darüber hinaus enthält das Erdgas aber auch größere Anteile an höheren Kohlenwasserstoffen, wie Ethan ($C_2H_6$), Propan ($C_3H_8$) und Butan ($C_4H_{10}$). Man spricht dann von einem nassen Erdgas. Der Grund hierfür liegt darin, dass die Bestandteile Ethan, Propan und Butan einen relativ geringen Dampfdruck aufweisen und daher unter Druck schnell verflüssigen. Der Dampfdruck beträgt bei 20 °C bei Ethan ca. 38 bar, bei Propan 8,5 bar und bei Butan 2,0 bar. Methan, der Hauptbestandteil des Erdgases, hat erst bei einer Temperatur von minus 157 °C einen Dampfdruck von 1,47 bar.

Wenn der Kraftstofftank mit dem CNG-Gasgemisch unter hohem Druck gefüllt ist, ist im Wesentlichen Methan in gasförmiger Form verfügbar, während die Bestandteile Ethan, Propan und Butan meist in flüssiger Phase vorliegen. Diese flüssigen Bestandteile sammeln sich am Boden des Kraftstofftanks und werden nicht genutzt, solange der Gasdruck im Kraftstofftank größer ist als der Dampfdruck von Ethan, Propan oder Butan. Erreicht dagegen der Gasdruck im Kraftstofftank den Wert des Dampfdruckes von Ethan, dann verdampft zunächst der flüssige Ethananteil, dessen Dampfdruck bei 20 °C bei etwa 38 bar liegt. Sinkt der Gasdruck im Kraftstofftank weiter ab, dann verdampft bei 8,5 bar der Propananteil und schließlich bei 2 bar der Butananteil. Dieses physikalische Verhalten hat zur Folge, dass bei der Einspritzung des Gasgemisches in die Brennkraftmaschine in Verbindung mit der angesaugten Luft die chemische Zusammensetzung des Gasgemisches kontinuierlich verändert wird. Bei vollem Kraftstofftank wird reines Methan-Luftgemisch eingespritzt bzw. verbrannt, wobei der Gasdruck im Kraftstofftank (Systemdruck) kontinuierlich sinkt. Wird bei etwa 38 bar der Dampfdruck von Ethan erreicht, dann beginnt dieses zu verdampfen und es entsteht ein Gemisch aus Methan und Ethan. Der Systemdruck bleibt solange konstant, bis der Ethananteil im Kraftstofftank verdampft ist. Anschließend fällt der Systemdruck weiter ab. Erreicht der Systemdruck bei ca. 8,5 bar die Dampfdruckschwelle vom Propan, dann verdampft der flüssige Propananteil. Ab jetzt wird ein Kraftstoffgemisch aus Methan, Ethan und Propan verbrannt.

Würde der Tank schließlich noch weiter leer gefahren, dann würde bei ca. 2 bar auch der Butananteil verdampfen. Bei CNG-Fahrzeugen liegt jedoch der Gasbetriebsdruck (Einspritzdruck in den Zylinder der Brennkraftmaschine) in der Regel deutlich über 2 bar. Dies hat zur Folge, dass der Butananteil stets in flüssiger Form vorliegt, im Tank verbleibt und sich dort von Tankfüllung zu Tankfüllung kontinuierlich ansammelt. Geht man von einem Butananteil von lediglich 1‰ und einem Durchschnittsverbrauch von 6 kg/100km Erdgas aus, so sammelt sich über eine Fahrstrecke von 100.000 km im Erdgasbetrieb rechnerisch eine Butanmenge von 6 kg bzw. 10 1 an. Dieses Volumen steht als Tankvolumen (ein typischer Gastank fasst ca.20 1) für das Erdgas nicht mehr zur Verfügung. Außerdem bleibt der Butananteil ungenutzt.

Im übrigen ist es aus der DE 103 41 089 A1 im Rahmen eines Verfahrens zur Steuerung der Direkteinspritzung in eine für den bivalenten Betrieb ausgelegte Brennkraftmaschine auch bekannt, während der reinen Gasbetriebsphase eine serielle Mehrfacheinspritzung, wenigstens eine Doppeleinspritzung zweier Gasteilmengen, durchzuführen.

Aus der WO 2006/106145 A1 ist bekannt eine Brennkraftmaschine mit Gasinjektionsanlage in einem Fahrzeug, wobei die Brennkraftmaschine auch bivalent ausgeführt sein kann, unterhalb eines gewissen Drucks im Gastank, mit deutlich vermindertem Systemdruck in der Gasinjektionsanlage zu betreiben. So soll der Brennstoffverbrauch reduziert, und die Restreichweite des Fahrzeugs erhöht werden.

Der Erfindung liegt die Aufgabe zugrunde, die beschriebene 'Tankversottung' bei bivalenten CNG-Fahrzeugen zu vermeiden und darüber hinaus den Butananteil als Kraftstoff aktiv nutzbar zu machen. Diese Aufgabe wird mit den kennzeichnenden Merkmalen der nebengeordneten Ansprüche 1 und 11 gelöst.

Bei dem erfindungsgemäßen Verfahren zur Steuerung der bivalent betreibbaren Brennkraftmaschine bzw. der Vorrichtung mit den Merkmalen der nebengeordneten Ansprüche 1 und 11 ergibt sich der Vorteil, dass die Butanmenge, die sich unter normalen Betriebsbedingungen am Boden des Gastanks ansammelt und das Tankvolumen mehr und mehr verringert, entfernt und dem Verbrennungsprozess als aktiver Bestandteil zugeführt wird. Das wird insbesondere dadurch erreicht, dass nach zwischenzeitlich erfolgter Umschaltung auf den Betrieb mit Ottokraftstoff in vorgebbaren Betriebsbereichen eine Mehrfacheinspritzung, wenigstens eine Doppeleinspritzung erfolgt, bei der eine erste Teilmenge Ottokraftstoff und eine zweite Teilmenge CNG-Gas eingespritzt wird. Die Mehrfacheinspritzung wird mindestens so lange fortgesetzt, bis der Gasdruck im Gastank unter den Dampfdruck von Butan gefallen ist, so dass die Tankentleerung auch auf das Butan übergreift.

Durch die in den abhängigen Ansprüchen aufgeführten Maßnahmen sind vorteilhafte Weiterbildungen und Verbesserungen des im Anspruch 1 angegebenen Verfahrens gegeben. Als besonders vorteilhaft wird angesehen, dass die mengenmäßige Aufteilung der Einspritzung zwischen Ottokraftstoff und CNG-Gas innerhalb des jeweils gegebenen Betriebsbereiches so erfolgt, dass der CNG-Gas-Anteil möglichst hoch ist, so dass der Gastank schnell entleert wird.

Üblicherweise ist in der Motorsteuerung nur ein Satz Endstufen zur Ansteuerung der Einspritzventile vorhanden, so dass Gas- und Benzineinspritzung seriell erfolgen müssen. Dann ist es günstig, dass die CNG-Gas- und Ottokraftstoffeinspritzung seriell erfolgt, wobei während des jeweiligen Arbeitsspiels der Brennkraftmaschine zuerst eine Ottokraftstoffeinspritzung erfolgt.

In einer besonders vorteilhaften Ausführung können die Einspritzventile für Benzin und Erdgas jedoch auch parallel betätigt werden. Dies ermöglicht größere Freiheitsgrade beim Einspritzphasing und erweitert den Parallelbetriebsbereich.

Wie viel Ergas eingespritzt werden kann, hängt zum einen vom Tankdruck, zum anderen vom Motorbetriebspunkt ab. Je geringer die Drehzahl ist, desto mehr Zeit bleibt, den Kraftstoff einzubringen. Je höher die Last, desto mehr Kraftstoff muss eingebracht werden. Der Tankdruck wird hierzu mit einem in der Regel vorhandenen Tankdrucksensor permanent gemessen. Da der Dampfdruck temperaturabhängig ist, muss auch die Gastemperatur gemessen werden, um feststellen zu können, ab wann Butan verdampft. Dies beeinflusst entscheidend die Gaszusammensetzung, deren Kenntnis für die Einspritzung (Stöchiometrie) zwingend notwendig ist, da die chemische Zusammensetzung (Kohlen- und Wasserstoffanteile) der einzelnen Bestandteile deutlich differiert. Gemäß einer vorteilhaften Ausführungsform der Erfindung erfolgt die Bestimmung der vom Füllstand abhängigen, aktuellen Gaszusammensetzung des mit einem CNG-Gasgemisch gefüllten Gastanks derart, dass die Temperatur im Gastank gemessen wird und daraus mit Hilfe eines Algorithmus der aktuelle Dampfdruck wenigstens eines Bestandteils des CNG-Gasgemisches, insbesondere für Butan ermittelt wird, wobei, wenn der gemessene aktuelle Gasdruck den ermittelten aktuellen Dampfdruck eines der Bestandteile des CNG-Gasgemisches im Gastank unterschreitet, eine entsprechende aktuelle Zusammensetzung des Gasgemisches bestimmt wird. Dies eröffnet gemäß einer weiteren Ausgestaltung die Möglichkeit, die für die Brennkraftmaschine einzuspritzende Gasmenge in Abhängigkeit von der aktuellen Gaszusammensetzung anzupassen.

Bei einer weiteren Ausgestaltung erfolgt abhängig von der aktuellen, durch Ottokraftstoff und CNG-Gas gebildeten Gemischzusammensetzung sowie vom Betriebspunkt eine Kraftstoffmengenberechnung, wobei entsprechend der eingebrachten CNG-Gasmasse eine Korrektur eines in einer Recheneinheit vorliegenden Liefergradmodells und/oder Zündverlaufs erfolgt.

Bei allen bisher genannten Ausführungsformen ist es günstig, nach Umschaltung auf den Betrieb mit Ottokraftstoff eine Mehrfacheinspritzung zur Butanentleerung des Gastanks nur dann einzuleiten, wenn eine festgelegte, im Gastank vorhandene Butan-Grenzmenge überschritten ist. Im Anschluss daran wird ein wesentlicher Vorteil der Erfindung auch in einer Weiterbildung gesehen, bei der der im Gastank vorhandene Butananteil mengenmäßig ermittelt wird, wobei aus dem gegebenen Gastankvolumen, der gemessenen Temperatur und dem vor und nach dem Tanken gemessenen Gasdruck im Gastank die getankte CNG-Gasmenge berechnet wird, und wobei anschließend aus der berechneten getankten CNG-Gasmenge und mittels einer vorliegenden Information über die Zusammensetzung des zuletzt getankten CNG-Gases dessen mengenmäßiger Butananteil berechnet und zu dem bereits im Gastank vorhandenen Butananteil dazu addiert wird.

Eine vorteilhafte Lösung wird auch darin gesehen, dass der Fahrer des Kraftfahrzeugs informiert wird, nicht CNG-Gas zu tanken, sondern den Gastank wenigstens annähernd leer zu fahren.

Schließlich erscheint auch von Vorteil, dass die Vorrichtung zur Steuerung einer bivalent betreibbaren Brennkraftmaschine eine programmgesteuerte Recheneinheit aufweist. Mit dieser Recheneinheit kann mit Hilfe eines Algorithmus und unter Verwendung der gemessenen Temperatur und des Gasdrucks im Gastank die Einspritzung im Sinne einer Butanentleerung des Gastanks gesteuert werden. Dabei hat sich als besonders vorteilhaft erwiesen, dass die Recheneinheit in einem Motorsteuergerät integriert ist, das im Kraftfahrzeug bereits vorhanden ist. Das vorhandene Motorsteuergerät benötigt lediglich ein entsprechendes Software-Programm, mit dem die erfindungsgemäße Aufgabe gelöst werden kann.

Ein Ausführungsbeispiel der Erfindung ist in der Zeichnung dargestellt und wird in der nachfolgenden Beschreibung näher erläutert.

Figur 1    zeigt ein Blockschaltbild einer erfindungsgemäßen Vorrichtung zur Steuerung einer bivalent betreibbaren Brennkraftmaschine,

Figur 2    zeigt ein Diagramm mit einer Druckkurve,

Figur 3    zeigt ein Ablaufdiagramm für die erfindungsgemäße Vorrichtung.

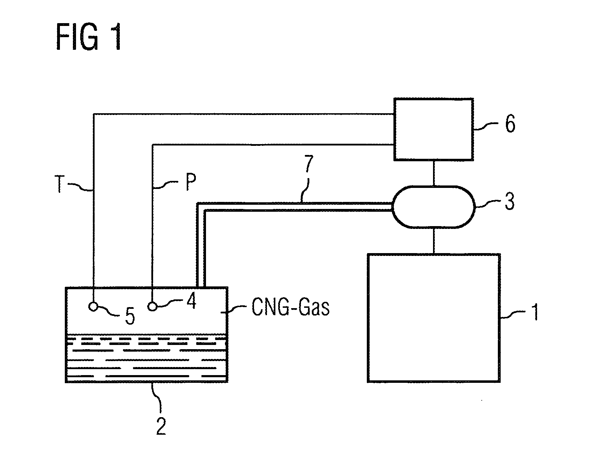

Das Blockschaltbild der Figur 1 zeigt ein erfindungsgemäßes Ausführungsbeispiel, bei dem eine Brennkraftmaschine 1 mit einem Einspritzsystem 3 verbunden ist. Die Brennkraftmaschine 1 ist als Otto-Motor ausgebildet. Der Otto-Motor ist dabei zum bivalenten Betrieb, das heißt zur umschaltbaren Verbrennung von CNG-Gas oder Benzin ausgebildet. Die Gaseinspritzung erfolgt mittels des Einspritzsystems 3. Das Einspritzsystem 3 ist über eine Hydraulikleitung 7 mit einem Gastank 2 verbunden, in dem das CNG-Gasgemisch gelagert ist. Der Gastank 2 ist hochdruckfest ausgebildet, so dass er dem üblichen Befüllungsdruck bis zu 200 bar widersteht. Aufgrund des hohen Gasdrucks ist das CNG-Gasgemisch teilweise im flüssigen Zustand gespeichert. Das CNG-Gasgemisch enthält als Hauptbestandteil mit 85 - 98% Methan, das aufgrund seines Dampfdruckes in gasförmiger Form vorliegt. Die Bestandteile Ethan, Propan und Butan weisen einen wesentlich niedrigeren Dampfdruck auf, so dass diese Anteile - im vollen Tank - in flüssiger Form im Gastank 2 gelagert sind.

Im oder am Tank sind des Weiteren ein Drucksensor 4 sowie ein Temperatursensor 5 angeordnet. Diese Sensoren 4, 5 messen kontinuierlich die Temperatur T sowie den Gasdruck (Systemdruck) P innerhalb des Gastanks 2. Die Messwerte werden über entsprechende elektrische Leitungen an eine Recheneinheit 6 weitergegeben. Aufgrund der empfangenen Daten berechnet die Recheneinheit 6 unter Zuhilfenahme eines entsprechenden Algorithmus, der später noch näher erläutert wird, eine aktuelle Gaszusammensetzung innerhalb des Gastanks 2 bzw. des Gassystems. Die Recheneinheit 6 weist im Wesentlichen ein Steuerprogramm auf, mit dem verschiedene Parameter, beispielsweise der Dampfdruck eines Bestandteils des CNG-Gasgemisches, das Tankvolumen, die Gaszusammensetzung usw. berechnet werden.

In einer alternativen Ausführungsform ist die Recheneinheit 6 in einem Motorsteuergerät integriert, das ohnehin für die Steuerung der Brennkraftmaschine vorhanden ist, insbesondere auch beim Betrieb mit Ottokraftstoff.

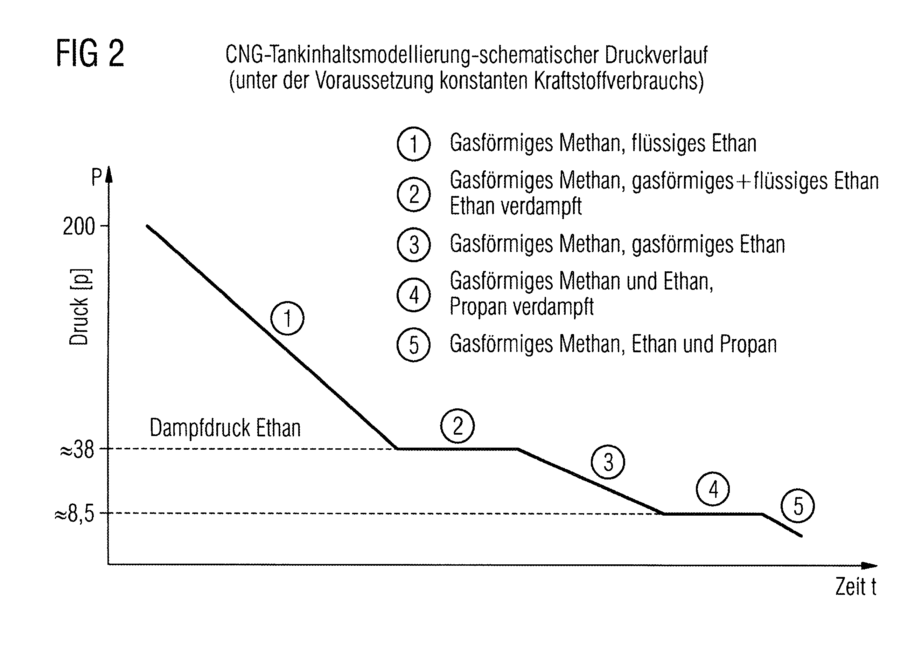

Die Funktionsweise dieser Anordnung wird im Folgenden zunächst hinsichtlich der Gaseinspritzung, primär im reinen CNG-Gas-Betrieb, anhand des ersten Diagramms der Figur 2 näher erläutert. Das Diagramm zeigt eine Druckkurve, bei der auf der Y-Achse der Gasdruck p im Gastank 2 aufgetragen ist, wie er von dem Drucksensor 4 gemessen wird. Auf der X-Achse ist der zeitliche Verlauf des Gasdrucks p aufgetragen, der vom Drucksensor 4 gemessen wird. Der Gastank ist dabei mit dem CNG-Gasgemisch gefüllt, wobei das CNG-Gasgemisch außer Methan u. a. auch die Bestandteile Ethan, Propan und Butan enthält. Es wird angenommen, dass der Gastank mit einem Gasdruck von 200 bar gefüllt ist. Die in Figur 2 dargestellte Druckkurve zeigt beispielhaft das Verhältnis zwischen dem Bestandteil Methan, Ethan und Propan. Für den Butananteil läuft die Druckkurve analog weiter.

Mit Hilfe der vorhandenen Druck- und Temperatursensoren werden im Gastank kontinuierlich die Gastemperatur und der Gasdruck gemessen. Gleichzeitig wird in der Recheneinheit der Dampfdruck von Ethan berechnet. Die Berechnung des Dampfdrucks von Ethan kann alternativ auch aus der in Figur 2 dargestellten Druckkurve bestimmt werden, da der Zeitpunkt des Verdampfungsbeginns des Ethananteils bei Erreichen des Dampfdruckwertes bei etwa 38 bar entnehmbar ist. Dieser Teil entspricht dem horizontal verlaufenden Kurventeil 2. Der abfallende Kurventeil 1, der zwischen den Druckwerten 200 und 38 bar verläuft, gibt dagegen an, dass in diesem Druckbereich nur das Methangas vorhanden ist, da die anderen Bestandteile des Gasgemisches im Bereich oberhalb von 38 bar in flüssiger Phase vorliegen. Bei Erreichen des Gasdrucks von 38 bar beginnt Ethan so zu verdampfen, dass trotz der weiteren Gasentnahme der Gasdruck im Gastank nicht weiter absinkt aber auch nicht steigt. Dieses ist durch den waagrechten Kurvenverlauf 2 erkennbar.

Der Dampfdruck bestimmt sich nach der Formel

$$p_d = (Gasdichte) * R * T \; ,$$

wobei $p_d$ der Dampfdruck, R eine Gaskonstante und T die Gastemperatur ist.

Tritt nun der Fall ein, dass der Gastank so weit leer gefahren wird, dass der Dampfdruck $p_d$ = 38 bar von Ethan erreicht wird, dann reagiert die Recheneinheit bzw. das Motorsteuergerät. Der Tankinhalt setzt sich zu diesem Zeitpunkt aus der restlichen gasförmigen Methanmenge und der sich in der Vergangenheit angesammelten flüssigen Ethanmenge zusammen. Bei diesem Dampfdruck $p_d \approx 38$ bar verdampft Ethan, so dass der Motor nun ein Gasgemisch aus Methan, Ethan und Luft verbrennt, wobei dessen Energieinhalt sich von dem bei reiner Methanverbrennung unterscheidet. Die in den Zylinder einzubringende Gasmenge muss entsprechend der aktuellen Gemischqualität angepasst werden, um der veränderten chemischen Zusammensetzung des Kraftstoffes (X% Methan, y% Ethan) gerecht zu werden und um das definierte Luft-Kraftstoff-Verhältnis beizubehalten. Die Zusammensetzung des Gasgemisches und damit die von der Motorsteuerung einzustellende Einspritzmenge ändert sich kontinuierlich. Die Änderung erfolgt solange, bis der ganze Ethananteil verdampft ist. So lange Ethan verdampft, befindet sich das System im Gleichgewicht und der Tankdruck bleibt konstant, wie dem Kurventeil 2 der Figur 2 entnehmbar ist. Erst wenn der gesamte Ethananteil verdampft ist, fällt der Tankdruck entsprechend dem Kurventeil 3 weiter ab.

Bei weiterem Gasverbrauch treten, wie in Figur 2 erkennbar, sukzessive weitere Gasanteile zum Gasgemisch hinzu, allerdings nicht Butan, da im Verlauf des Kurventeils 5 eine (automatische) Umschaltung auf den Betrieb mit Ottokraftstoff erfolgt, um alle möglichen Betriebspunkte des Motors abdecken zu können. Letzteres wäre mit dem geringen CNG-Gas-Restdruck nicht möglich. Diese Umschaltung muss sicherheitshalber erfolgen, bevor der Gasdruck den Dampfdruck von Butan unterschritten hat, was aber zur Folge hat, dass danach das flüssige Butan im Gastank verbleibt und sich mit jeder neuen Tankfüllung weiter ansammelt.

Um dem entgegenzuwirken, wird das erfindungsgemäße Verfahren eingesetzt, das folgendermaßen verläuft. Ist der Erdgastank nahezu leer gefahren (p < p Schwelle) und wurde zwischenzeitlich auf den Betrieb mit Ottokraftstoff umgestellt, erfolgt in günstigen Betriebsbereichen pro Arbeitsspiel eine Doppeleinspritzung und zwar eine mit Ottokraftstoff und eine mit Erdgas, so dass ein Gemisch aus Benzin, Erdgas und Luft verbrannt wird. Fällt der Tankdruck unter 2 bar, verdampft das flüssige Butan und wird so dem Verbrennungsprozess zugeführt. Dies erfolgt gegebenenfalls so lange, bis der Erdgastank vollständig entleert ist. Die mengenmäßige Aufteilung der Einspritzung zwischen Benzin und Erdgas erfolgt günstigerweise so, dass der Ergasanteil möglichst hoch ist, um den Tank schnell zu entleeren. Wie viel Ergas eingespritzt werden kann, hängt zum einen vom Tankdruck, zum anderen vom Motorbetriebspunkt ab. Je geringer die Drehzahl ist, desto mehr Zeit bleibt, den Kraftstoff einzubringen. Je höher die Last, desto mehr Kraftstoff muss eingebracht werden. Der Tankdruck wird hierzu mit einem in der Regel vorhandenen Tankdrucksensor permanent gemessen. Da der Dampfdruck temperaturabhängig ist, muss auch die Gastemperatur gemessen werden, um feststellen zu können, ab wann Butan verdampft. Dies beeinflusst entscheidend die Gaszusammensetzung, deren Kenntnis für die Einspritzung (Stöchiometrie) zwingend notwendig ist, da die chemische Zusammensetzung (Kohlen- und Wasserstoffanteile) der einzelnen Bestandteile deutlich differiert. Die Bestimmung der Gaszusammensetzung, jetzt bezüglich des Hinzutretens von Butan, kann analog wie zuvor im Zusammenhang mit Figur 2 beschrieben, erfolgen.

Bei einer vorteilhaften Ausführung wird die Zusammensetzung des getankten Erdgases als bekannt vorausgesetzt. Die beim Tankvorgang getankte Gasmenge kann mit Hilfe des Druck- und Temperatursensors bei bekanntem Tankvolumen einfach berechnet werden. Daraus wird der mengenmäßige Butananteil berechnet und zu dem bereits vorhandenen dazu addiert. Es wird eine im Gastank befindliche Butan-Grenzmenge festgelegt, ab der das erfindungsgemäße Verfahren zur Butanentleerung des Gastanks zur Anwendung kommt. Die Kenntnis der unter normalen Betriebsbedingungen vorhandenen flüssigen Mengenanteile hat zusätzlich den Vorteil, dass beim Übergang der entsprechenden Komponenten in den gasförmigen Zustand die verbleibende Reichweite des Fahrzeugs ermittelt werden kann, was allein aus Kenntnis des Tankdrucks nicht möglich ist.

Der Vorteil des Verfahrens besteht wie bereits erwähnt darin, dass die Butanmenge, die sich unter normalen Betriebsbedingungen am Boden des Gastanks ansammelt und das Tankvolumen mehr und mehr verringert, entfernt und dem Verbrennungsprozess als aktiver Bestandteil zugeführt wird.

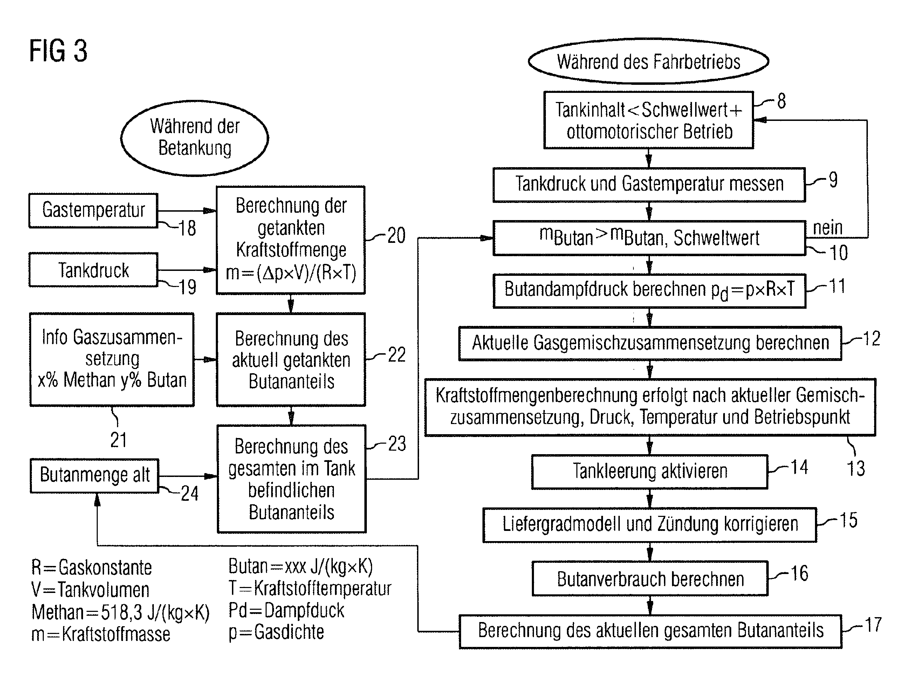

Das Flussdiagramm der Figur 3 zeigt ein Ablaufdiagramm zur Darstellung eines Ausführungsbeispiels für die im Sinne einer Butanentleerung des Gastanks erfolgende Steuerung der Einspritzung der Brennkraftmaschine. Während des Fahrbetriebs wird in Position 8 zunächst auf rein ottomotorischen Betrieb umgeschaltet, wenn - aus einer reinen CNG-Gas Fahrphase heraus - der Gasdruck im Gastank auf Grund des Verbrauchs beim Fahren von anfangs bis zu mehreren hundert bar so weit abgesunken war, dass mit dem noch vorhandenen Restdruck bzw. Restgas im Einspritzsystem nicht mehr alle möglichen Betriebspunkte des Motors sicher abdeckbar sind. Dieser Schwellwert des Gasdrucks kann typischerweise bei 5-6 bar, das heißt jedenfalls oberhalb des Dampfdrucks von Butan, liegen. In Position 9 wird dann der Gasdruck und die Temperatur im Gastank fortlaufend gemessen und dem Motorsteuergerät zur Verfügung gestellt. Gemäß Position 10 wird anschließend überprüft, ob die im Gastank vorhandene Butanmasse einen vorgegebenen Schwellwert überschreitet. Ist das nicht der Fall, dann springt das Programm auf Position 8 zurück und der Zyklus wiederholt sich. Im anderen Fall, wenn die vorhandene Butanmasse größer als der vorgegebene Schwellwert ist (so dass sich das Einleiten einer Gastankentleerung 'lohnt'), dann wird in Position 11 der aktuelle Butandampfdruck berechnet, so dass, wie weiter oben beschrieben, in Position 12 die aktuelle Gasgemischzusammensetzung berechnet werden kann. Des Weiteren erfolgt in Position 13 eine Kraftstoffmengenberechnung nach aktueller Gemischzusammensetzung, Druck, Temperatur und Betriebspunkt. Sobald gemäß Position 14 der rein ottomotorische Betrieb zu Gunsten einer Doppeleinspritzung mit Benzin- und CNG-Gas-Teilmengen tatsächlich verlassen wurde, beginnt die gewünschte Entleerung des Gastanks, die (nach mehr oder weniger kurzer Zeit) auch den Butananteil umfasst. Anschließend erfolgt in Position 15 in Abhängigkeit von der aktuellen Gemischzusammensetzung bzw. Kraftstoffmengenberechnung eine Korrektur des im Motorsteuergerät gespeicherten Liefergradmodells und/oder des gespeicherten Zündverlaufs. Diese Korrektur kann beispielsweise durch Verstellung des Zündwinkels, durch Änderung der Einspritzdauer oder dergleichen erfolgen. Aus den somit im Motorsteuergerät vorhandenen Daten kann dann in Position 16 der Butanverbrauch berechnet, bzw. gemäß Position 17 der aktuelle gesamte Butananteil im Gastank ermittelt werden.

Während der Betankung wird, wie aus Figur 3 ersichtlich, zunächst in Position 18 und 19 der Gasdruck bzw. die Temperatur im Gastank mit Hilfe der eingebauten Sensoren ermittelt. In Position 20 erfolgt dann eine Berechnung der getankten Kraftstoffmenge (CNG-Gas), in die der sich aus den gemessenen Druckwerten vor dem Tanken und nach dem Tanken ergebende Druckunterschied entscheidend eingeht. Wenn gemäß Position 21 im Motorsteuergerät eine Information über die tatsächliche Gaszusammensetzung des gerade getankten CNG-Gases vorliegt, kann gemäß Position 22 daraus (und aus dem Ergebnis von Position 20) eine Berechnung des aktuellen getankten Butananteils durchgeführt werden. Schließlich kann daraus in Position 23 eine Berechnung des gesamten im Gastank befindlichen Butananteils erfolgen, bei der gemäß Position 24 auch die schon bisher im Gastank befindliche, 'alte' Butanmenge Berücksichtigung findet, deren Berechnung auf der während des Fahrbetriebs in Position 17 vorgenommenen Berechnung des aktuellen gesamten Butananteils beruht. Die gemäß Position 23 berechnete Butanmasse kann dann, wie in Figur 3 dargestellt, während des Fahrbetriebs von dem Motorsteuergerät in Position 10 in der dort beschriebenen Weise ausgewertet werden.

**Patentansprüche**

1. Verfahren zur Steuerung einer Brennkraftmaschine (1) eines wahlweise auf den Betrieb mit Ottokraftstoff oder CNG-Gas umschaltbaren Kraftfahrzeugs, wobei bei Unterschreiten eines Mindestgasdrucks im Gastank (2) des Kraftfahrzeugs eine Umschaltung auf den Betrieb mit Ottokraftstoff erfolgt, **dadurch gekennzeichnet,**
dass nach zwischenzeitlich erfolgter Umschaltung auf den Betrieb mit Ottokraftstoff in vorgebbaren Betriebsbereichen eine Mehrfacheinspritzung, wenigstens eine Doppeleinspritzung erfolgt, bei der eine erste Teilmenge Ottokraftstoff und eine zweite Teilmenge CNG-Gas eingespritzt wird, wobei die Mehrfacheinspritzung mindestens so lange fortgesetzt wird, bis der Gasdruck im Gastank (2) unter den Dampfdruck von Butan gefallen ist.

2. Verfahren nach Anspruch 1, **dadurch gekennzeichnet, dass** die mengenmäßige Aufteilung der Einspritzung zwischen Ottokraftstoff und CNG-Gas innerhalb des jeweils gegebenen Betriebsbereiches so erfolgt, dass der CNG-Gas-Anteil möglichst hoch ist, so dass der Gastank (2) schnell entleert wird.

3. Verfahren nach Anspruch 1 oder 2, **dadurch gekennzeichnet, dass** die CNG-Gas- und Ottokraftstoffeinspritzung seriell erfolgt, wobei während des jeweiligen Arbeitsspiels der Brennkraftmaschine (1) zuerst eine Ottokraftstoffeinspritzung erfolgt.

4. Verfahren nach Anspruch 1 oder 2, **dadurch gekennzeichnet, dass** die CNG-Gas- und Ottokraftstoffeinspritzung während des jeweiligen Arbeitsspiels der Brennkraftmaschine (1) zeitlich parallel erfolgt.

5. Verfahren nach einem der Ansprüche 1 bis 4, **dadurch gekennzeichnet, dass** eine Ermittlung der vom Füllstand abhängigen, aktuellen Gaszusammensetzung des mit einem CNG-Gasgemisch gefüllten Gastanks (2) erfolgt, wobei die Temperatur im Gastank (2) gemessen wird und daraus mit Hilfe eines Algorithmus der aktuelle Dampfdruck wenigstens eines Bestandteils des CNG-Gasgemisches, insbesondere für Butan ermittelt wird, und wobei, wenn der gemessene aktuelle Gasdruck den ermittelten aktuellen Dampfdruck eines der Bestandteile des CNG-Gasgemisches im Gastank (2) unterschreitet, eine entsprechende aktuelle Zusammensetzung des Gasgemisches bestimmt wird.

6. Verfahren nach Anspruch 5, **dadurch gekennzeichnet, dass** die für die Brennkraftmaschine (1) einzuspritzende Gasmenge in Abhängigkeit von der aktuellen Gaszusammensetzung angepasst wird.

7. Verfahren nach Anspruch auf 5 oder 6, **dadurch gekennzeichnet, dass** abhängig von der aktuellen, durch Ottokraftstoff und CNG-Gas gebildeten Gemischzusammensetzung sowie vom Betriebspunkt eine Kraftstoffmengenberechnung erfolgt, wobei entsprechend der eingebrachten CNG-Gasmasse eine Korrektur eines in einer Recheneinheit (6) vorliegenden Liefergradmodells und/oder Zündverlaufs erfolgt.

8. Verfahren nach einem der Ansprüche 1 bis 7, **dadurch gekennzeichnet, dass** nach Umschaltung auf den Betrieb mit Ottokraftstoff eine Mehrfacheinspritzung zur Butanentleerung des Gastanks nur dann eingeleitet wird, wenn eine festgelegte, im Gastank (2) vorhandene Butan-Grenzmenge überschritten ist.

9. Verfahren nach Anspruch 8, **dadurch gekennzeichnet, dass** der im Gastank (2) vorhandenen Butananteil mengenmäßig ermittelt wird, wobei aus dem gegebenen Gastankvolumen, der gemessenen Temperatur und dem vor und nach dem Tanken gemessenen Gasdruck im Gastank (2) die getankte CNG-Gasmenge berechnet wird, und wobei anschließend aus der berechneten getankten CNG-Gasmenge und mittels einer vorliegenden Information über die Zusammensetzung des zuletzt getankten CNG-Gases dessen mengenmäßiger Butananteil berechnet und zu dem bereits im Gastank (2) vorhandenen Butananteil dazu addiert wird.

10. Verfahren nach einem der vorhergehenden Ansprüche, **dadurch gekennzeichnet, dass** der Fahrer des Kraftfahrzeugs informiert wird, nicht CNG-Gas zu tanken, sondern den Gastank (2) wenigstens annähernd leer zu fahren.

11. Vorrichtung zur Steuerung einer Brennkraftmaschine (1) eines wahlweise auf den Betrieb mit Ottokraftstoff oder CNG-Gas umschaltbaren Kraftfahrzeugs, **dadurch gekennzeichnet, dass** die Vorrichtung Mittel zur Durchführung aller Schritte eines Verfahrens nach einem der vorhergehenden Ansprüche aufweist, wobei die Vorrichtung eine programmgesteuerte Recheneinheit (6) aufweist die ausgebildet ist, mit Hilfe eines Algorithmus und unter Verwendung der gemessenen Temperatur und des Gasdrucks im Gastank (2) die Einspritzung im Sinne einer Butanentleerung des Gastanks (2) zu steuern.

12. Vorrichtung nach Anspruch 11, **dadurch gekennzeichnet, dass** die Recheneinheit (6) Teil eines im Kraftfahrzeug vorhandenen Motorsteuergerätes ist.

**Claims**

1. Method for controlling an internal combustion engine (1) of a motor vehicle which can be switched selectively between operation with gasoline or CNG, wherein a switch to operation with gasoline takes place if a minimum gas pressure in the gas tank (2) of the motor vehicle is undershot, **characterized in that**, after a switch has taken place to operation with gasoline, in predefinable operating ranges, a multiple injection, at least one double injection, takes place in which a first partial quantity of gasoline and a second partial quantity of CNG is injected, wherein the multiple injection is continued at least until the gas pressure in the gas tank (2) has fallen below the vapour pressure of butane.

2. Method according to Claim 1, **characterized in that** the quantitative splitting of the injection between gasoline and CNG within the respectively present operating range takes place such that the CNG fraction is as high as possible, such that the gas tank (2) is emptied quickly.

3. Method according to Claim 1 or 2, **characterized in that** the CNG and gasoline injections take place in series, wherein a gasoline injection takes place first during the respective working cycle of the internal combustion engine (1).

4. Method according to Claim 1 or 2, **characterized in that** the CNG and gasoline injections take place temporally in parallel during the respective working cycle of the internal combustion engine (1).

5. Method according to one of Claims 1 to 4, **characterized in that** a determination of the fill-level-dependent present gas composition of the gas tank (2) which is filled with a CNG mixture takes place, wherein the temperature in the gas tank (2) is measured and, from this, by means of an algorithm, the present vapour pressure of at least one constituent of the CNG mixture, in particular for butane, is determined, and wherein, if the measured present gas pressure falls below the determined present vapour pressure of one of the constituents of the CNG mixture in the gas tank (2), a corresponding present composition of the gas mixture is determined.

6. Method according to Claim 5, **characterized in that** the gas quantity to be injected for the internal combustion engine (1) is adapted as a function of the present gas composition.

7. Method according to Claim 5 or 6, **characterized in that** a fuel quantity calculation takes place as a function of the present mixture composition formed by gasoline and CNG and of the operating point, wherein a correction of an efficiency model and/or ignition profile present in a processing unit (6) takes place corresponding to the CNG mass introduced.

8. Method according to one of Claims 1 to 7, **characterized in that**, after a switch to operation with gasoline, a multiple injection for evacuating butane from the gas tank is initiated only when a defined butane threshold quantity present in the gas tank (2) is exceeded.

9. Method according to Claim 8, **characterized in that** the butane fraction present in the gas tank (2) is determined quantitatively, wherein from the given gas tank volume, the measured temperature and the gas pressure in the gas tank (2) measured before and after the tank replenishment process, the CNG gas quantity with which the tank has been replenished is calculated, and wherein subsequently, from the calculated CNG quantity with which the tank has been replenished and by means of an item of information present regarding the composition of the CNG with which the tank has been most recently replenished, the quantitative butane fraction thereof is calculated and added to the butane fraction already present in the gas tank (2).

10. Method according to one of the preceding claims, **characterized in that** the driver of the motor vehicle is informed not to fill the tank with CNG gas but rather to run the gas tank (2) at least approximately empty.

11. Device for controlling an internal combustion engine (1) of a motor vehicle which can be switched selectively between operation with gasoline or CNG, **characterized in that** the device has means for carrying out all of the steps of a method according to one of the preceding claims, wherein the device has a program-controlled processing unit (6) which is designed to control the injection for the purpose of evacuating butane from the gas tank (2) by means of an algorithm and using the measured temperature and the gas pressure in the gas tank (2).

12. Device according to Claim 11, **characterized in that** the processing unit (6) is part of an engine control unit provided in the motor vehicle.

**Revendications**

1. Procédé pour la commande d'un moteur à combustion interne (1) d'un véhicule à moteur, pouvant au choix être commuté en mode essence ou en mode gaz CNG, dans lequel, quand la pression du gaz dans le réservoir de gaz (2) du véhicule à moteur passe en-dessous d'une valeur minimale, il se produit une commutation au mode essence, **caractérisé en ce que**,

   après une commutation qui a eu lieu entre-temps pour passer en mode essence, il se produit dans des domaines de fonctionnement prédéfinissables une injection multiple, au moins une double injection, au cours de laquelle une première quantité partielle d'essence et une deuxième quantité partielle de gaz CNG sont injectées, l'injection multiple étant poursuivie au moins jusqu'à ce que la pression du gaz dans le réservoir de gaz (2) soit tombée en-dessous de la pression de vapeur du butane.

2. Procédé selon la revendication 1, **caractérisé en ce que** la répartition de l'injection en quantité entre l'essence et le gaz CNG s'effectue dans le domaine de fonctionnement respectif donné de telle sorte que la proportion de gaz CNG soit si possible élevée afin que le réservoir de gaz (2) se vide rapidement.

3. Procédé selon la revendication 1 ou 2, **caractérisé en ce que** l'injection du gaz CNG et l'injection de l'essence s'effectuent en série, une injection d'essence ayant d'abord lieu pendant le cycle de fonctionnement respectif du moteur à combustion interne (1).

4. Procédé selon la revendication 1 ou 2, **caractérisé en ce que** l'injection du gaz CNG et l'injection de l'essence s'effectuent en parallèle dans le temps, pendant le cycle de fonctionnement respectif du moteur à combustion interne (1).

5. Procédé selon l'une des revendications 1 à 4, **caractérisé en ce qu'**on procède à une détermination de la composition effective du gaz, dépendante du niveau de remplissage, du réservoir de gaz (2) rempli d'un mélange de gaz CNG, dans lequel la température dans le réservoir de gaz (2) est mesurée, et, à partir de cette température, on détermine à l'aide d'un algorithme la pression de vapeur effective d'au moins un constituant du mélange de gaz CNG, en particulier pour le butane, et dans lequel, quand la pression effective du gaz, telle que mesurée, passe en-dessous de la pression de vapeur effective déterminée de l'un des constituants du mélange de gaz CNG dans le réservoir de gaz (2), on détermine une composition effective correspondante du mélange de gaz.

6. Procédé selon la revendication 5, **caractérisé en ce que** la quantité de gaz devant être injectée pour le moteur à combustion interne (1) est adaptée en fonction de la composition effective du gaz.

7. Procédé selon la revendication 5 ou 6, **caractérisé en ce que**, en fonction de la composition effective du mélange formé par l'essence et le gaz CNG, ainsi que du point de fonctionnement, on procède à un calcul de la quantité de carburant, procédé dans lequel, compte tenu de la masse de gaz CNG introduite, il se produit une correction d'un modèle de rendement volumétrique et/ou d'un processus d'allumage, qui se trouve(nt) dans une unité de calcul (6).

8. Procédé selon l'une des revendications 1 à 7, **caractérisé en ce que**, après commutation au mode essence, une injection multiple pour évacuer le butane hors du réservoir de gaz n'est déclenchée qu'une fois dépassée une quantité limite de butane déterminée, présente dans le réservoir de gaz (2).

9. Procédé selon la revendication 8, **caractérisé en ce que** la part de butane présente dans le réservoir de gaz (2) fait l'objet d'une détermination de sa quantité, procédé dans lequel, à partir du volume donné du réservoir de gaz, de la température mesurée et de la pression du gaz, mesurée avant et après avoir fait le plein dans le réservoir de gaz (2), la quantité de gaz CNG introduite dans le réservoir est calculée, et dans lequel, ensuite, à partir de la quantité de gaz CNG introduite et qui a été calculée et à l'aide d'une information présente portant sur la composition du gaz CNG qui a été introduit en dernier, on calcule sa part de butane en quantité, et on l'ajoute à la part de butane déjà présente dans le réservoir de gaz (2).

10. Procédé selon l'une des revendications précédentes, **caractérisé en ce que** le conducteur du véhicule à moteur est informé de ne pas faire le plein de gaz CNG, mais d'utiliser le réservoir de gaz (2) au moins approximativement vide.

11. Dispositif pour la commande d'un moteur à combustion interne (1) d'un véhicule à moteur pouvant au choix être commuté en mode essence ou en mode gaz CNG, **caractérisé en ce que** le dispositif présente des moyens pour mettre en oeuvre toutes les étapes d'un procédé selon l'une des revendications précédentes, lequel dispositif présente une unité de calcul (6) commandée par un programme qui est ainsi configurée, à l'aide d'un algorithme, et par utilisation de la température mesurée et de la pression du gaz dans le réservoir de gaz (2), qu'elle peut commander l'injection dans le sens d'une évacuation du butane du réservoir de gaz (2).

12. Dispositif selon la revendication 11, **caractérisé en ce que** l'unité de calcul (6) est une partie d'un appareil de commande du moteur présent dans le véhicule à moteur.

FIG 1

# FIG 2

CNG-Tankinhaltsmodellierung-schematischer Druckverlauf
(unter der Voraussetzung konstanten Kraftstoffverbrauchs)

① Gasförmiges Methan, flüssiges Ethan

② Gasförmiges Methan, gasförmiges+flüssiges Ethan
Ethan verdampft

③ Gasförmiges Methan, gasförmiges Ethan

④ Gasförmiges Methan und Ethan,
Propan verdampft

⑤ Gasförmiges Methan, Ethan und Propan

P

Druck [p]

200

Dampfdruck Ethan

≈38

≈8,5

① ② ③ ④ ⑤

Zeit t

## FIG 3

Während des Fahrbetriebs

Tankinhalt < Schwellwert + ottomotorischer Betrieb — 8

Tankdruck und Gastemperatur messen — 9

$m_{Butan} > m_{Butan, Schweltwert}$ — 10  nein

Butandampfdruck berechnen $p_d = p \times R \times T$ — 11

Aktuelle Gasgemischzusammensetzung berechnen — 12

Kraftstoffmengenberechnung erfolgt nach aktueller Gemischzusammensetzung, Druck, Temperatur und Betriebspunkt — 13

Tankleerung aktivieren — 14

Liefergradmodell und Zündung korrigieren — 15

Butanverbrauch berechnen — 16

Berechnung des aktuellen gesamten Butananteils — 17

Während der Betankung

Gastemperatur — 18

Tankdruck — 19

Berechnung der getankten Kraftstoffmenge $m = (\Delta p \times V)/(R \times T)$ — 20

Info Gaszusammensetzung x% Methan y% Butan — 21

Berechnung des aktuell getankten Butananteils — 22

Butanmenge alt — 24

Berechnung des gesamten im Tank befindlichen Butananteils — 23

R = Gaskonstante
V = Tankvolumen
Methan = 518,3 J/(kg×K)
m = Kraftstoffmasse

Butan = xxx J/(kg×K)
T = Kraftstofftemperatur
Pd = Dampfduck
p = Gasdichte

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0718484 B1
- DE 10341089 A1

- WO 2006106145 A1